Europäisches Patentamt

European Patent Office

Office européen des brevets

(11) Veröffentlichungsnummer: **0 474 003 A2**

# EUROPÄISCHE PATENTANMELDUNG

(21) Anmeldenummer: **91113827.9**

(22) Anmeldetag: **17.08.91**

(51) Int. Cl.5: **H01M 10/48, G01F 23/24**

(30) Priorität: **05.09.90 DE 9012676 U**

(43) Veröffentlichungstag der Anmeldung:
**11.03.92 Patentblatt 92/11**

(84) Benannte Vertragsstaaten:
**AT DE ES FR GB IT NL SE**

(71) Anmelder: **VARTA Batterie Aktiengesellschaft**
**Am Leineufer 51**
**W-3000 Hannover 21(DE)**

(72) Erfinder: **Schmidt, Hartmut, Dipl.-Ing.**
Asternstrasse 24
W-5820 Gevelsberg(DE)
Erfinder: **Falk, Klaus-Martin**
Pappelstrasse 36
W-5800 Hagen(DE)
Erfinder: **Jackstoff, Michael**
Kapellenstrasse 63
W-5800 Hagen(DE)

(74) Vertreter: **Kaiser, Dieter Ralf, Dipl.-Ing.**
Gundelhardtstrasse 72
W-6233 Kelkheim/Ts.(DE)

(54) **Vorrichtung zur Elektrolytstandsüberwachung bei einer Akkumulatorenbatterie.**

(57) Eine Einrichtung zum Überwachen des Elektrolytstandes bei einer Akkumulatorenbatterie vereint in einem Schutzgehäuse (3), welches mittels eines hülsenartigen Fortsatzes am Boden in eine Diagnoseöffnung einsteckbar ist, eine von der Hülse fest ummantelte, in den Elektrolyten eintauchende Sensorelektrode (nicht sichtbar) und eine mit der Elektrode kontaktierte elektronische Schaltung, deren Energieversorgung über Verbindungsleitungen (9, 10) zu den Zellenpolen allein aus der Zellenspannung der betreffenden Zelle gedeckt wird, wobei ein Spannungsvervielfacher in Form eines integrierten elektronischen Bausteins durch Hochsetzen der Eingangsspannung auf ca. 3 Volt auch bei weitgehend entladenen Zellen eine zuverlässige Messung ermöglicht. Sobald bei Unterschreiten eines zulässigen minimalen Elektrolytpegels die Elektrode nicht mehr eintaucht, wird ein Schalttransistor aufgrund des nunmehr zur Elektrode hin offenen Stromkreises leitend und gibt den Stromfluß durch eine Leuchtdiode (4) frei, die durch Aufleuchten ein notwendiges Nachfüllen signalisiert.

**Fig.4**

EP 0 474 003 A2

Die Erfindung betrifft eine Vorrichtung zur Elektrolytstandsüberwachung bei einer Akkumulatorenbatterie mit einer in den Batterieelektrolyten eintauchenden Sensorelektrode, die über einen von einer äußeren Spannungsquelle versorgten elektronischen Schaltkreis mit einer Signaleinrichtung verbunden ist, welche ein Absinken des Elektrolytpegels unter eine minimale Füllhöhe anzeigt.

Klassische Füllstandskontrollen arbeiten nach einem mechanischen oder optischen Prinzip, z. B. in der Weise, daß im Akkumulator ein Schwimmer vorhanden ist und ein mit diesem verbundener, in einem Rohr verschiebbarer und aus dem Akkumulator herausragender Stab den Pegelstand des Elektrolyten anzeigt, oder daß ein in bestimmter Weise geschliffener Glasstab, solange er in den Elektrolyten eintaucht, dem prüfenden Auge bei Draufsicht aufgrund der herrschenden Lichtbrechungsverhältnisse dunkel erscheint, bei Nichteintauchen dagegen einen Eindruck von Helligkeit vermittelt. Diese Einrichtungen sind platzaufwendig und ungenau.

Bei den fortschrittlicheren elektrischen Vorrichtungen zur Füllstandsmessung besteht die Grundausführung immer darin, daß eine elektrischleitende Sonde oder Sensorelektrode mit einem der Batteriepole verbunden ist und beim Eintauchen der Elektrode ein Stromkreis geschlossen wird. Eine in diese Ringverbindung eingeschaltete Signalvorrichtung, z. B. in Form einer Glühbirne, zeigt dann durch Aufleuchten das Bestehen einer elektrolytischen Verbindung zwischen der Elektrode und dem Batteriepol, d. h. einen ausreichenden Elektrolytfüllstand an.

Dieses Anzeigeprinzip geht allerdings an dem eigentlichen Anliegen, nämlich den Zustand mangelhafter Elektrolytfüllung durch ein Warnsignal besonders augenfällig zu machen, vorbei, weil die Glühbirne gerade erlischt, sobald dieser Zustand durch Trockenfallen der Elektrode eingetreten ist.

Gemäß DE-AS 23 44 991 wird eine "positive" Anzeige dadurch erreicht, daß in dem erwähnten Stromkreis ein Transistor als Schaltelement einbezogen wird, derart, daß sein Emitter mit dem einen und sein Kollektor mit dem anderen Pol der Batterie verbunden ist, und daß seine Basis einerseits mit der in den Elektrolyten eintauchenden Elektrode, andererseits über einen Widerstand mit dem an den Kollektor angeschlossenen Pol der Batterie verbunden ist. Sobald nun nach Trockenfallen der Elektrode der Stromkreis vom Transistor zu dieser hin offen ist, wird der Transistor aufgrund der aufgehobenen Basisspannung leitend, so daß Strom durch die mit dem Transistor in Serie geschaltete Glühbirne fließt und diese leuchtet. Den gleichen Zweck wie die Glühbirne erfüllt auch eine Leuchtdiode.

Bei einer anderen bekannten Füllstandskontrollvorrichtung gemäß DE-OS 37 23 446 enthält der zwischen den Batterie-Endpolen liegende Stromkreis auf parallelen Leitungen zwei Transistoren mit je einer in Serie geschalteten Leuchtdiode, wobei der eine Transistor über seine Basis mit einer Tauchsonde verbunden ist. Je nachdem, ob nun der Stromkreis zur Sonde offen oder geschlossen ist, sperrt der eine Transistor, während der andere leitend ist und die ihm zugeordnete Diode in der Warnfarbe rot leuchtet, oder der andere Transistor ist nichtleitend und der wegen des geschlossenen Stromkreises zur Sonde hin (Eintauchzustand) leitend gewordene erste Transistor läßt die ihm seriell zugeschaltete Diode grün leuchten. Die genannte Druckschrift enthält auch den Hinweis, daß zur funktionsgerechten Steuerung des Transistors die zwischen der Tauchsonde und dem einen Batteriepol liegende Spannung u. U. nicht ausreicht, wenn man als Testzelle für die Füllstandsmessung die nächstbenachbarte 2. Zelle aus dem Zellenverbund wählt und diese außerdem weitgehend entladen ist. Dies bedeutet, daß man als Preis für eine zuverlässige Anzeige die Spannung mehrerer in Serie geschalteter Elemente in Anspruch nehmen muß und insofern in der Wahl einer bestimmten Testzelle nicht frei ist.

Der Erfindung liegt daher die Aufgabe zugrunde, für eine Akkumulatorenbatterie der eingangs bezeichneten Gattung eine Einrichtung zum Überwachen des Elektrolytfüllstandes verfügbar zu machen, die sich problemlos gebrauchen läßt, auch bei Schräglage der Batterie sicher funktioniert und bei Umgebungstemperaturen bis zu etwa 70 °C einwandfreie Signale liefert.

Die Aufgabe wird mittels einer Vorrichtung gelöst, wie sie im Patentanspruch 1 definiert ist. Danach besteht ein wesentliches Teilmerkmal der Erfindung darin, daß die Energieversorgung für die elektronische Anzeige- und Schaltvorrichtung allein von der Klemmenspannung nur einer Batteriezelle, nämlich derjenigen, in welche die Elektrode als Meßsonde eintaucht, gedeckt wird, wobei jedoch im Eingangsteil des hier verwendeten Schaltkreises ein Spannungsvervielfacher in Form eines integrierten elektronischen Bausteins vorhanden ist.

Der elektronische Schaltkreis befindet sich auf einer Platine innerhalb eines an der Sensorelektrode (fortan kurz Elektrode genannt) angebrachten Schutzgehäuses. Die Elektrode selbst, die vorzugsweise aus Blei oder einer Blei-Antimonlegierung besteht und die Gestalt eines dünnen Stabes besitzt, wird von einem hülsenförmigen Fortsatz des Schutzgehäuses aus Kunststoff fest ummantelt, so daß Elektrode und Gehäuse ein einheitliches, gut handliches Teil bilden, welches unter Ausnutzung der Kunststoffummantelung als Führungshülse leicht in eine eigens vorgesehene Öffnung des Batteriedeckels eingesteckt werden kann.

Anhand einiger Figuren wird die Erfindung nachstehend in ihrem ganzen Zusammenhang erläutert.

Figur 1 zeigt eine Elektrode mit Schutzgehäuse im Schnitt.

Figur 2 zeigt den Gegenstand der Figur 1 von außen, um 90 ° C gedreht.

Figur 3 zeigt die elektrische Anbindung der Elektrode an den negativen Batteriepol in einem Teilschnitt.

Figur 4 zeigt die fertig montierte Überwachungsvorrichtung für den Elektrolytstand auf einer Zelle, die mit anderen im Zellenverbund steht, in einer Draufsicht.

Figur 5 zeigt das dem Überwachungsbetrieb zugrundeliegende Schaltbild.

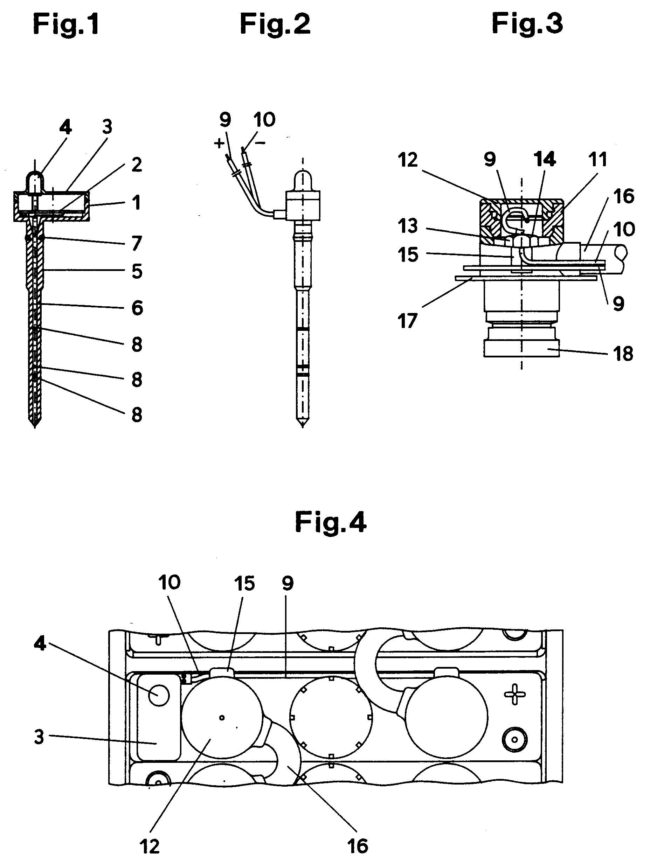

Nach Figur 1 umfaßt das Schutzgehäuse 1 mit Deckel 3 die den elektronischen Schaltkreis tragende Platine 2, eine Leuchtdiode 4 sowie durch seine zu einer Führungshülse ausgestalteten Verlängerung 5 auch die Elektrode 6, welche bis auf eine freie Spitze von dem Hülsenmaterial fest ummantelt ist und am anderen Ende mit der Platine im elektrischen Kontakt steht.

Andere Ausführungsformen, die jedoch alle im Rahmen der Erfindung liegen, können den Ersatz der Leuchtdiode durch eine Fernanzeige, z. B. ein akustisches Signal, vorsehen; Gehäuse 1 und Führungshülse 5 können trennbar oder ein einstückiges Teil sein, die Platine 2 kann fest montiert oder wie die Diode 4 auswechselbar sein. Die Sichtkuppel über der Leuchtdiode ist durchsichtig und gegebenenfalls eingefärbt.

Eine gute Abdichtung der Führungshülse gegen den Zellendeckel gewährleistet der O-Ring 7.

Von großem praktischen Vorteil ist die Einrichtung von Sollbruchstellen 8 an der Elektrode gemäß der Erfindung. Diese ermöglichen es, die Elektrodenlänge bzw. erforderliche Eintauchtiefe durch einfaches Ablängen des Elektrodenstabes mitsamt dem Umhüllungsmaterial, an den Markierungen, die die Lage der Sollbruchstellen anzeigen, an andere Zellgefäßgrößen oder - formen anzupassen.

Figur 2 gibt die komplette Elektrode der Figur 1 von außen und nach einer Drehung um 90 ° C mit Blick auf die Schmalseite des Gehäuses wieder. Dadurch treten die Anschlußleitungen 9 und 10 gut sichtbar hervor, über welche der Platinenschaltkreis mit dem positiven und mit den negativen Zellenpol verbunden ist. Einzelheiten der Anbindung dieser Leitungen an den jeweiligen Zellenpol, hier von Leitung 10 an den negativen Pol, sind aus der Figur 3 zu ersehen. Danach ist einer Polschraube 13 ein Ringkontakt 14 aufgeschweißt und an diesen die Anschlußleitung 10 angelötet. Dem ringförmigen Tubus des Verbinders ist ein Adapterring 11 aufgesetzt und dieser mit dem Verbinderdeckel 12 verschlossen. Zur Aufnahme der beiden Anschlußleitungen, von denen Leitung 9 nur am negativen Pol vorbei und weiter zum positiven Zellenpol geführt wird, ist an den Adapterring 11 eine Kabelführung 15 angespritzt, die Rillen besitzt, in denen die Leitungen durch Eindrücken leicht fixiert werden können. In die Figur ist ferner ein Kabelverbinder 16, der Zeilendeckel 17 und der Zellenpol 18 mit aufgenommen. Figur 4 gibt mit einer Draufsicht auf eine Batteriezelle, die mit der erfindungsgemäßen Elektrolytfüllstandsmeßvorrichtung ausgestattet ist, vor allem die Führung der Anschlußleitungen 9 und 10 zu den Zellenpolen deutlich wieder. Man erkennt im einzelnen den Schutzgehäusedeckel 3 mit der Leuchtdiode 4, den Verbinderdeckel 12 auf dem negativen Pol, die Kabelführung 15 für die Anschlußleitungen sowie einen Kabelverbinder 16.

Zum Einstecken der Elektrode in die Zelle wird zweckmäßig eine Diagnoseöffnung im Deckel genutzt.

Nachdem die Elektrode in den Elektrolyten eingetaucht ist und die Leitungen 9, 10 durch eine Steckverbindung am Schutzgehäuse an die Platine angeschlossen sind, liegt an dem elektronischen Schaltkreis auf der Platine die Zellenspannung als dessen Betriebsspannung an.

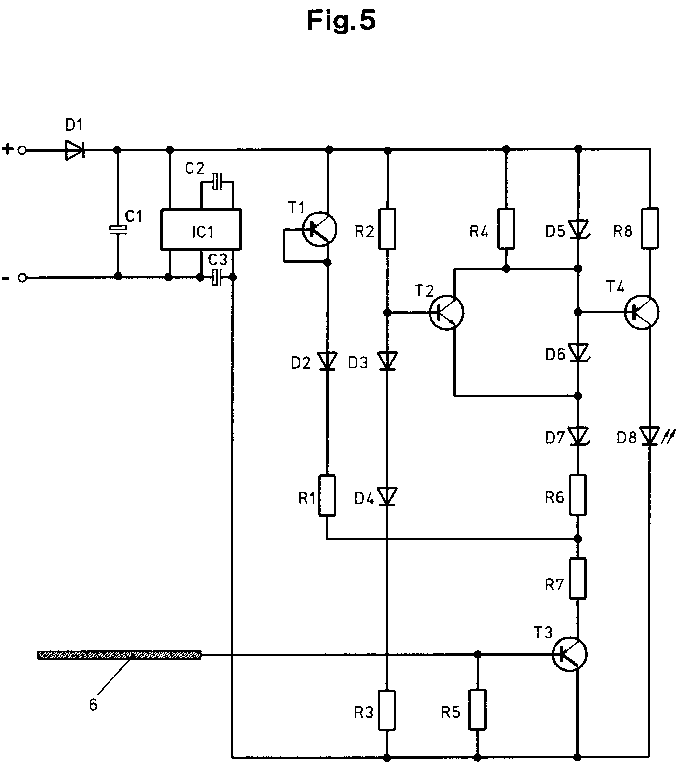

Gemäß Schaltplan der Figur 5 arbeitet die Schaltung nun im wesentlichen wie folgt:
Zunächst sorgt eine Diode D1 am positiven Eingang des Schaltkreises dafür, daß dieser bei einer irrtümlichen Falschpolung keinen Schaden erleidet. Der integrierte elektronische Baustein IC1 erhöht die Eingangsspannung als Spannungsvervielfacher um den doppelten Betrag, etwa auf 3 Volt, womit Spannungssignale von stets ausreichender Größe und eine ebenso zuverlässige Anzeige gewährleistet sind. Die Testzeile ist damit hinsichtlich der Energieversorgung der Füllstandsüberwachungseinrichtung "autark" und bedarf keiner höheren Spannungsabgriffe aus dem Zellenverbund.

Die eigentliche Schaltfunktion wird von dem Transistor T3 ausgeübt, dessen Basis einerseits mit der Elektrode 6, andererseits über den Widerstand R5 mit dem Minuspol der Zelle verbunden ist.

Bei eingetauchter Elektrode ist der Transistor T3 und ebenso der Transistor T4 gesperrt; durch die Leuchtdiode D8 fließt kein Strom, sie bleibt dunkel.

Sobald der Elektrolytpegel soweit abgesunken ist, daß die Elektrode trocken fällt, bricht die sperrende Spannung an der Basis von T3 zusammen und der Transistor wird über den Widerstand R5 durchgesteuert, d. h. leitend. Der darauf einsetzende Stromfluß öffnet auch den Transistor 4, die Diode 8 leuchtet auf und zeigt damit an, daß Elektrolyt in dieser Zelle nachgefüllt werden muß.

Mit Rücksicht darauf, daß Füllstandskontrollen ganz unabhängig vom aktuellen Ladezustand einer Zelle vorgenommen werden, ist eine Spannungsregelung der Schaltung vorgesehen, die auch bei unterschiedlichen Zellenspannungen eine richtige Schaltschwelle für den Transistor T3 sicherstellt. Diese Spannungsregelung geschieht durch den Transistor T2. Der Transistor T1 dient zur Temperaturstabilisierung der Schaltung.

Der Umstand, daß die Energieversorgung des Schaltkreises allein aus der Spannung der für die Elektrolytstandsmessung ausgewählten Einzelzelle gedeckt wird und die Schaltelektronik auf der Platine mit der Sensorelektrode durch das verbindende Schutzgehäuse ein integrales Meß- und Anzeigeinstrument bilden, macht es möglich, beliebig viele Zellen einer Batterie unabhängig voneinander mit derartigen Meßelektroden auszustatten und zu überwachen. Dies bedeutet vor allem derjenigen bekannten Überwachungseinrichtungen gegenüber einen Vorteil, bei denen die Schaltelemente sowie die optischen bzw. akustischen Anzeigen in gesonderten Gehäusen angeordnet sind. Da bei der aktuellen Vorrichtung der Strom in der Schaltung stabilisiert ist, kann es zu keinen gefährlichen oder unzulässigen Betriebszuständen kommen. Der Strom durch die Sensorelektrode ist auch nicht stark genug, um gegebenenfalls ein Knallgasgemisch zu zünden. Im übrigen teilt die Überwachungsvorrichtung gemäß Erfindung mit bekannten Füllstandskontrollen, die nach einem elektrischen Meßprinzip arbeiten, den Vorteil der Lageunabhängigkeit, die bei mechanischen Einrichtungen (Verkanten den Schwimmers) oder optischen Tauchprismen (falscher Helligkeitseindruck bei Schrägsicht oder zu großem Augenabstand vom Prisma) nicht gewährleistet ist.

**Patentansprüche**

1. Vorrichtung zur Elektrolytstandsüberwachung bei einer Akkumulatorenbatterie mit einer in den Batterieelektrolyten eintauchenden Sensorelektrode, die über einen von einer äußeren Spannungsquelle versorgten elektronischen Schaltkreis mit einer Signaleinrichtung verbunden ist, welche ein Absinken des Elektrolytpegels unter eine minimale Füllhöhe anzeigt, dadurch gekennzeichnet, daß der elektronische Schaltkreis an die Klemmen einer Einzelzelle angeschlossen ist und daß er in seinem Eingangsteil einen Spannungsvervielfacher enthält und daß der Sensorelektrode ein in den Zellendeckel einsteckbares stopfenartiges Gehäuse, welches den Schaltkreis aufnimmt, zugeordnet ist.

2. Vorrichtung nach Anspruch 1, dadurch gekennzeichnet, daß der Spannungsvervielfacher aus einem integrierten elektronischen Baustein besteht.

3. Vorrichtung nach Anspruch 1 oder 2, dadurch gekennzeichnet, daß die Sensorelektrode von einer Führungshülse umschlossen ist.

4. Vorrichtung nach einem der Ansprüche 1 bis 3, dadurch gekennzeichnet, daß Führungshülse und Sensorelektrode zwecks Anpassung an verschiedene Größen von Zellgefäßen durch Ablängen mit Sollbruchstellen versehen sind.

# Fig.1

# Fig.2

# Fig.3

# Fig.4

# Fig.5